# EUROPÄISCHE PATENTSCHRIFT

(11) **EP 3 459 701 B1**
(45) Veröffentlichungstag und Bekanntmachung des Hinweises auf die Patenterteilung: **03.11.2021**
(21) Anmeldenummer: 18191208.0
(22) Anmeldetag: 28.08.2018
(51) Int. Cl.: B29B 9/06, B29C 48/33, B29C 48/30, B29C 48/04, B26D 1/36, B26D 1/28, A23P 30/10

(54) **SCHNEIDVORRICHTUNG ZUM ZERKLEINERN VON PASTÖSEN STOFFEN**
CUTTING DEVICE FOR COMMINUTING PASTY MATERIALS
DISPOSITIF DE COUPE POUR DÉCOUPER DES MATIÈRES PÂTEUSES

(30) Priorität: 31.08.2017 DE 102017120047
(43) Veröffentlichungstag der Anmeldung: 27.03.2019
(73) Patentinhaber: BMA Braunschweigische Maschinenbauanstalt AG, 38122 Braunschweig (DE)
(72) Erfinder: GASSMANN, Jochen, 38229 Salzgitter (DE)
(74) Vertreter: Gramm, Lins & Partner Patent- und Rechtsanwälte PartGmbB

(56) Entgegenhaltungen:
- DE-A1- 1 779 054
- US-A- 1 987 358
- US-A- 3 025 565

## Beschreibung

Die Erfindung betrifft eine Schneidvorrichtung zum Zerkleinern von pastösen Stoffen mit einer Düse mit einem Düsengehäuse, das zumindest einen Einlass mit einem Eintritts-Strömungsquerschnitt, durch den der pastöse Stoff in die Düse eintritt, und einen Auslass mit einem Austritts-Strömungsquerschnitt, durch den der pastöse Stoff aus der Düse austritt, sowie einen von dem Einlass zu dem Auslass führenden Strömungskanal aufweist, mit einem an dem Auslass angeordneten rotierenden Schneidwerkzeug zum Schneiden des austretenden pastösen Stoffes. Die Erfindung betrifft ebenfalls ein System aus einer solchen Schneidvorrichtung und einer Weiterverarbeitungseinrichtung, die mit der Schneidvorrichtung gekoppelt ist.

Die Erfindung betrifft insbesondere eine Schneidvorrichtung und ein System zum Zerkleinern und zum Vereinzeln insbesondere von solchen pastösen Stoffen mit schwer oder nicht zerteilbaren Fasern und/oder Partikeln. Solche pastösen Stoffe werden zu Pellets zerkleinert, so dass formlose Massen zuverlässig zu gleichförmigen Formkörpern vereinzelt werden können. Gleichzeitig mit der Zerkleinerung und Vereinzelung können die Formkörper, die mit Fasern und Fremdstoffen verunreinigt und auch oberflächig klebrig sein können, in ein umgebendes Fluid eingebracht werden, beispielsweise in eine Vakuum- oder Hochdruckumgebung.

Bei aus dem Stand der Technik bekannten Verfahren zum Pelletieren pastöser Stoffe oder gestaltloser Massen wird der Stoff durch eine Formdurchbrüche aufweisende Matrize oder Düsenplatte gepresst, der Schneideinrichtung vorgelagert oder nachgelagert sind, um die entstehenden Schnüre oder Materialstränge mit Sollbruchstellen zu versehen oder vollständig über den Querschnitt der aus den Formausbrüchen austretenden Massen zu teilen. Solche Vorrichtungen sind aus der EP 0 225 351 A1, der DE 196 17 972 B4 oder der DE 40 13 760 C2 bekannt. Diesen Schneidvorrichtungen gemeinsam ist, dass bei verändertem Materialdurchsatz die Bewegung der Schneideinrichtung angepasst wird, um eine konstante Pelletlänge zu erhalten. Dadurch entstehen insbesondere bei Produktschwankungen, also bei nicht kontanten Zusammensetzungen des zu vereinzelnden Stoffes und bei sehr großen und sehr kleinen Materialdurchsätzen, Probleme bei der Vereinzelung der geschnittenen Formkörper.

Aus der EP 0 945 172 A1 ist ein Verfahren bekannt, bei dem ein pumpbarer Stoff durch einen aus zwei Teilen einer Vorrichtung gebildeten Ringspalt nach außen gefördert wird, wobei zumindest ein Teil der beiden den Spalt und die Öffnungen im Außenring bildenden Teile drehbar ist und sich im Gehäuse sowie im Stoff bewegt. Die dabei entstehenden Partikel sind ungleichmäßig und werden mit einem hohen Impuls weggeschleudert.

Aus der DE 197 10 302 A1 ist eine Vorrichtung bekannt, bei der pastöse Medien zerkleinert werden, indem ein Schredder vor einem Produktauslass die Masse mit einer mit Schlagzähnen versehenen Walze von dem Produktstrom abschlägt. Dadurch werden ungleichförmige Partikel mit einem hohen Impuls erzeugt.

Aus der EP 1 618 947 A1 ist eine Vorrichtung zum Erzeugen von Pellets beschrieben, bei der die Länge von zuvor durch eine Matrize erzeugter Schnüre oder Stränge unabhängig von der Vorschubgeschwindigkeit des hindurchgepressten Materials und der Drehgeschwindigkeit von Trennmessern gewählt werden kann. Dazu sind zwischen den Formdurchbrüchen in der Matrize Stege angeordnet, die mindestens so breit wie ein Messer sind. Das Schneidwerkzeug wird zur Ausführung eines Schneidvorganges intervallmäßig im Kreis gedreht, wenn die Stränge die jeweils gewünschte Länge erreicht haben. Anschließend verbleiben die Messer in der jeweiligen Ruheposition vor einem Steg.

Nachteilig an den aus dem Stand der Technik bekannten Lösungen ist, dass der Stoffstrom durch Formdurchbrüche gepresst und dadurch getrennt werden muss, um gleichförmige Partikel zu erzeugen, bevor die Schnüre oder Stränge quer geteilt werden. Der eigentliche Trennvorgang ist dabei unproblematisch, jedoch wird ein hoher Druck zum Verpressen des pastösen Stoffes durch die Öffnungen der Matrize benötigt. Da die meisten pastösen Stoffe inkompressibel sind, ist der Energieaufwand für das Durchpressen sehr hoch. Darüber hinaus wird das eingesetzte Material hoch belastet und die pastösen Stoffe werden hohen Druckbeanspruchungen und Temperaturerhöhungen infolge der Krafteinwirkungen ausgesetzt. Darüber hinaus ist diese Art der Herstellung von Pellets anfällig für Verstopfungen, insbesondere wenn die pastösen Stoffe Fasern, Haare, Drähte, Störstoffe oder Rußpartikel aufweisen. Darüber hinaus neigen die entstehenden Schnüre aus pastösem Material nach dem Schneiden stark zum erneuten Verkleben und müssen aufwendig voneinander getrennt gehalten oder gegebenenfalls zusätzlich zerkleinert werden. Dies geschieht meist durch Schneideinrichtungen vor dem Durchtritt des Stoffes durch die Matrize, um Sollbruchstellen zu erzeugen. Dazu bewegt sich ein Schneidinstrument direkt auf der Innenseite der Matrize, so dass sowohl die Matrize als auch das Schneidinstrument einem sehr hohen Verschleiß und einer sehr hohen mechanischen Belastung unterliegen.

Die DE 1 779 054 A betrifft eine Vorrichtung zum Plastifizieren und Granulieren von thermoplastischen Kunststoffen. Die Vorrichtung besteht aus einem konisch ausgebildeten Rotor, der in einem Hohlkörper gleichachsig rotiert und an einem Austrittsspalt eine zylindrische Verlängerung aufweist. Der zylindrischen Verlängerung ist eine Verlängerungswelle angeschlossen, auf welcher in axialer Richtung verschiebbar eine Buchse angeordnet ist, welche über Kugellager eine Halterung trägt. Fest mit der Halterung ist ein Messerring verbunden, auf dem Trennmesser schraubenlinienförmig angeordnet sind. Der Messerring ist mit dem Hohlkörper nicht fest verbunden, sondern wird von Stiften gegen ein Verdrehen gesichert. Der Messerring ist starr mit der Halterung verbunden und wird von dieser geführt.

Die US 3 025 565 A betrifft eine Vorrichtung zum kontinuierlichen Formen geformter plastifizierter Massen mit einem Gehäuse und einem zentral daran angeordneten, konischen, angetriebenen Rotor und einer daran befestigten Extruderschnecke. An dem Rotor sind Rippen angeordnet, die das Material in Förderrichtung bewegen. Die über den Rotor hinaus transportierten plastifizerten Bänder oder Streifen werden von einem Messer abgeschnitten und fallen in den Einlassbereich der Extruderschnecke.

Die US 1 987 358 A betrifft unter anderem eine Vorrichtung zum Herstellen von Produkten aus Kunststoffen oder Keramikmaterialien wie Ton, Schiefer oder Mischungen daraus. Die Materialien werden durch eine Düse extrudiert, so dass sich längliche Streifen ausbilden, die abgetrennt und anschließend in einer Atmosphäre mit geringerem Umgebungsdruck weiterverarbeitet werden.

Aufgabe der vorliegenden Erfindung ist es, eine Vorrichtung und ein System zum Zerkleinern von pastösen Stoffen bereitzustellen, mit denen pastöse Stoffe zuverlässig mit einem möglichst geringen Energieaufwand zu Formteilen oder Pellets zerkleinert werden können.

Erfindungsgemäß wird diese Aufgabe durch eine Schneidvorrichtung mit den Merkmalen des Hauptanspruches sowie ein System mit den Merkmalen des nebengeordneten Anspruches gelöst. Vorteilhafte Ausgestaltungen und Weiterbildungen der Erfindung sind in den Unteransprüchen, der Beschreibung sowie den Figuren offenbart.

Die erfindungsgemäße Schneidvorrichtung zum Zerkleinern von pastösen Stoffe mit einer Düse mit einem Düsengehäuse, das zumindest einen Einlass mit einem Eintritts-Strömungsquerschnitt, durch den der pastöse Stoff in die Düse eintritt, und einen Auslass mit einem Austritts-Strömungsquerschnitt, durch den der pastöse Stoff aus der Düse austritt, sowie einen von dem Einlass zu dem Auslass führenden Strömungskanal aufweist und mit einem an dem Auslass angeordneten, rotierenden Schneidwerkzeug zum Schneiden des austretenden pastösen Stoffes sieht vor, dass der Austritts-Strömungsquerschnitt die Form eines insbesondere unterbrochenen Ringspaltes aufweist, der durch einen sich in Förderrichtung des pastösen Stoffes im Querschnitt vergrößernden Zentralkörper innerhalb der Düse und einer Innenwand des Strömungskanals gebildet ist. Die Düse mit dem Düsengehäuse ist im Wesentlichen rohrförmig, wobei das Düsengehäuse geradlinig ausgerichtet oder auch gebogen sein kann. Vorzugsweise weist das Düsengehäuse nur eine Biegung mit einem vergleichsweise großen Biegeradius auf. Das Gehäuse weist nur einen Auslass auf, der einen Austritts-Strömungsquerschnitt bildet, durch den der pastöse Stoff aus der Düse austritt. Der Austritts-Strömungsquerschnitt hat die Form eines Ringspaltes, insbesondere eines unterbrochenen Ringspaltes, wobei die Kontur des Ringspaltes bevorzugt kreisförmig ausgebildet ist, grundsätzlich besteht jedoch auch die Möglichkeit, dass die Kontur des Ringspaltes oval oder polygonal ausgebildet sein kann. Der Ringspalt wird durch einen sich in Förderrichtung des pastösen Stoffes im Querschnitt vergrößernden Zentralkörpers zusammen mit einer Innenwand des Strömungskanals gebildet. Der Zentralkörper ist somit innerhalb des Strömungskanals angeordnet oder ausgebildet und sorgt dafür, dass sich der von dem Einlass zum Auslass geförderte Stoffstrom umformt oder umlagert, so dass keine voneinander getrennten Stoffströme durch einen Auslass oder durch Formausbrechungen in einer Matrize hindurchgepresst werden müssen. Dies hat den Vorteil, dass durch den sich in Richtung auf den Auslass vergrößernden Zentralkörper eine Umlagerung, Umlenkung oder Umleitung des Stoffstromes ergibt, ohne dass dieser geteilt wird. Dadurch entstehen keine Strömungshindernisse oder Strömungsabrisse, an denen sich Stauungen oder Verklebungen bilden oder Fasern, Drähte oder andere Materialien innerhalb der pastösen Masse verfangen können. Das Düsengehäuse kann einteilig ausgebildet und in einem Urformverfahren hergestellt sein, alternativ dazu kann eine mehrteilige Ausgestaltung mit Befestigungsmitteln aneinander vorgesehen sein, was eine Bearbeitung der Innenwand des Strömungskanals sowie die Formgestaltung des Strömungskanals erleichtern kann. Die Formgestaltung der Pellets erfolgt nicht durch Matrizen, sondern durch eine Ausgestaltung eines Zwischenraumes einer Innenwand eines Strömungskanals und einem darin befindlichen Zentralkörper. In der Erfindung ist vorgesehen, dass der Zentralkörper sich von der Innenwand des Strömungskanals in Förderrichtung geneigt in den Strömungskanal hinein erstreckt, so dass eine kontinuierliche oder quasi kontinuierliche Umformung des Strömungsquerschnitts entlang der Förderrichtung innerhalb des Strömungskanals erfolgt. Durch den Ansatzpunkt an der Innenwand des Strömungskanals wird das pastöse Material um den Ansatz des Zentralkörpers herum geleitet. Der Zentralkörper befindet sich nicht und muss sich nicht zentral innerhalb des Strömungskanals befinden, sondern nur innerhalb des Strömungskanals und ragt in diesen hinein. Zumindest im Bereich des Ansatzes, also an dem dem Einlass zugewandten Ende des Zentralkörpers, kann dieser eine Kegelform aufweisen, die die Innenwand durchdringt oder von dieser in den Strömungskanal hinein sich wölbt, so dass der Stoffstrom in Form einer gebogenen Fläche umgelagert wird, die in den Austritts-Strömungsquerschnitt in Form eines Ringspaltes mündet.

Der Zentralkörper kann einstückig mit dem Düsengehäuse ausgebildet sein oder aber, wenn das Düsengehäuse mehrteilig ausgebildet ist, einstückig mit einem Teil eines Düsengehäuseteils ausgebildet sein, um eine kontinuierliche Innenoberfläche oder eine durchgehende Innenwand des Strömungskanals zu gewährleisten. Durch eine einstückige Ausgestaltung, beispielsweise als Gussteil, als additiv hergestelltes Bauteil oder als gesintertes Bauteil können komplexe Geometrien ohne Schnittstellen erzeugt werden. Der Montageaufwand wird verringert und aufgrund der geschlossenen Innenoberfläche eine vergrößerte Haltbarkeit gewährleistet. Alternativ zu einer einstückigen Ausgestaltung des Zentralkörpers mit dem Düsengehäuse oder einem Düsengehäuseteil kann der Zentralkörper als separater Einsatz in dem Strömungskanal befestigt sein. Durch eine separate Ausgestaltung des Zentralkörpers ist es möglich, unterschiedliche Zentralkörper in ein Düsengehäuse einzubauen, um beispielsweise eine größere Variantenvielfalt bei der Anpassung der Schneidvorrichtung an die gewünschten Leistungsparameter zu erreichen. Je nach zu verarbeitendem Stoff können unterschiedliche Zentralkörper in ein Düsengehäuse eingesetzt und daran festgelegt werden, beispielsweise um die Geometrie des Ringspaltes, der zwischen der Innenwand des Strömungskanals und der Außenkontur des Zentralkörpers gebildet wird, an die gewünschte Pelletgröße oder an das verwendete Material anzupassen. Darüber hinaus können bei Verschleiß an dem Zentralkörper Wartungsarbeiten vorgenommen oder ein Austausch erleichtert werden. Darüber hinaus können entsprechende Materialpaarungen vorgesehen werden, so dass unterschiedliche Materialien zur Herstellung der Schneidvorrichtung, insbesondere des Düsengehäuses und des Zentralkörpers verwendet werden, die eine an die jeweils vorhandenen Belastungen angepasste Materialauswahl ermöglicht. Auch kann die Herstellung einer teilweisen komplexen Struktur mit einem gebogenen Strömungskanal durch eine mehrteilige Ausgestaltung erleichtert werden.

Eine Weiterbildung der Erfindung sieht vor, dass sich die Strömungsquerschnittsfläche des Strömungskanals in Förderrichtung nicht verringert. Auch die Fläche des Austritts-Strömungsquerschnitts ist nicht kleiner als die Fläche des Eintritts-Strömungsquerschnitts, bevorzugt ist sie zumindest gleich der Fläche oder größer als die Fläche des Eintritts-Strömungsquerschnitts, um einerseits das pastöse Material zu entspannen oder zumindest zu komprimieren, so dass nach Möglichkeit keine oder nur eine geringe Druckerhöhung innerhalb des geförderten Stoffes vor dem Auslass erfolgt. Bei einem nicht vorhandenen Staudruck durch eine Flächenverringerung im Bereich von Matrizen können hohe Volumenströme bei nur einem geringen Druckverlust erreicht werden. Auch empfindliche Materialien können daher in der Schneidvorrichtung verarbeitet werden. Darüber hinaus sind keine Druckschwankungen in einer vorgeschalteten Fördereinrichtung zu erwarten, die beispielsweise bei unterschiedlich hohen Wasseranteilen innerhalb des pastösen Stoffes auftreten können. Insbesondere bei der Verarbeitung von Mehrphasengemischen kann es sonst zu Kompressibilitätsschwankungen kommen, die nachteilige Auswirkungen auf den Antrieb bzw. die Pumpe sowie auf eine Materialbelastung haben.

In einer Ausgestaltungsform der Erfindung ist der Zentralkörper konisch ausgebildet, wobei dieser sich kontinuierlich im Querschnitt vergrößernd ausgebildet sein kann. Auch bei einer nicht konischen Formgebung des Zentralkörpers kann dieser sich kontinuierlich im Querschnitt vergrößernd ausgebildet sein, wenn eine von einem Konus abweichende Formgebung gewünscht ist. Zusammen mit der sich vergrößernden Querschnittsfläche des Zentralköpers entlang der Förderrichtung von dem Einlass zum Auslass ist vorgesehen, dass sich auch der Innendurchmesser der Innenwand des Strömungsgehäuses vergrößert, um eine zumindest gleichbleibende Fläche des Strömungsquerschnittes entlang der Förderrichtung innerhalb des Strömungskanals zu gewährleisten. Somit entsteht der Ringspalt, insbesondere ein unterbrochener Ringspalt, durch eine kontinuierliche Querschnittsveränderung über die Länge des Strömungskanals, was eine Umlagerung des Stoffstromes ohne eine Aufteilung in mehrere Teilströme zur Folge hat.

Der Zentralkörper kann als massives Bauteil ausgebildet sein oder als ein angeformtes Formstück bei einer einstückigen Ausgestaltung. Alternativ kann der Zentralkörper als Hohlkörper ausgebildet sein und beispielsweise bei einer Ausgestaltung des Strömungskanals als Rohr durch ein zunehmendes Eindrücken mit einem korrespondierenden Aufweiten auf der gegenüberliegenden Seite erfolgen, so dass über eine Umformung der Zentralkörper aus einem einteiligen Rohr hergestellt ist. Die Form des unterbrochenen Ringspaltes ist dann im Wesentlichen C-förmig oder angenähert C-förmig. Die jeweiligen Enden eines unterbrochenen Ringspaltes können geradlinig, spitz zulaufend oder abgerundet sein und sind abhängig von den jeweiligen Prozessparametern, verwendeten Materialien, Fertigungsverfahren sowie der zu zerteilenden oder zu zerschneidenden pastösen Stoffe gestaltet.

Bei einer nicht einteiligen Ausgestaltung des Zentralkörpers kann dieser längsverschieblich und insbesondere federbelastet entgegen der Verschieberichtung an dem Gehäuse gelagert sein. Durch eine Längsverschieblichkeit des Zentralkörpers entlang der Längserstreckung des Strömungskanals in oder entgegen der Förderrichtung ist es möglich, die Form beziehungsweise die Fläche des Austritts-Strömungsquerschnittes zu verändern und an die jeweiligen Prozessparameter anzupassen. In der jeweils längsverschobenen Position ist der Zentralkörper an dem Düsengehäuse festlegbar oder arretierbar. Bei einer federbelasteten Lagerung des Zentralkörpers innerhalb des Düsengehäuses besteht die Möglichkeit, dass bei einer Förderung des pastösen Materials größere Feststoffe, die nicht durch den Austritts-Strömungsquerschnitt hindurchtreten können, den Zentralkörper verschieben und somit eine Vergrößerung des Austritts-Strömungsquerschnittes bewirken. Da sich der Zentralkörper entgegen der Förderrichtung verjüngt, vergrößert sich bei einer Verschiebung des Zentralkörpers in Förderrichtung der Austritts-Strömungsquerschnitt, so dass Störungen vermieden und Feststoffe oder andere Störkörper durch den Strömungskanal bis aus dem Auslass heraus befördert werden können. Über die Federbelastung wird der Zentralkörper dann wieder in die Ausgangsstellung zurückbewegt.

In einer vorteilhaften Ausgestaltung ist eine Antriebswelle des Schneidwerkzeuges in dem Zentralkörper gelagert, so dass durch den Zentralkörper hindurch das Schneidwerkzeug angetrieben werden kann. Die Antriebswelle reicht bevorzugt durch den Zentralkörper hindurch und tritt aus dem Düsengehäuse aus. Die Antriebswelle verbindet das rotierende Schneidwerkzeug mit einem außerhalb des Düsengehäuses gelagerten Antrieb, sofern das Schneidwerkzeug nicht durch einen Direktantrieb angetrieben wird. Da die Welle oder der Direktantrieb innerhalb des Zentralkörpers und somit innerhalb des Düsengehäuses verläuft, findet keine Stoffberührung der Welle mit dem pastösen Stoff statt. Es befinden sich somit keine beweglichen Teile innerhalb des Düsengehäuses, die mit dem zu zerteilenden, pastösen Stoff in Berührung kommen können, so dass eine Kontaminierung des pastösen Stoffes oder auch ein Verschleiß der Welle oder des Antriebes nicht in Frage kommt.

Bevorzugt ist das Düsengehäuse mit einer Biegung versehen, so dass der Strömungskanal ebenfalls eine Biegung ausführt. Dadurch wird das Herausführen der Antriebswelle aus dem Düsengehäuse erleichtert. Die Welle, insbesondere wenn sie als starre Welle ausgebildet ist, kann dann geradlinig im Bereich der Biegung in den Zentralkörper eingeführt werden und erstreckt sich innerhalb des Zentralkörpers geradlinig bis zum Auslass. Bevorzugt ist die Welle derart gelagert, dass sie im Mittelpunkt des Ringspaltes oder, bei einer unrunden oder polygonalen Ausgestaltung der Form des Austritts-Strömungsquerschnittes, zentral darin angeordnet ist, so dass ein Schneidelement oder eine Schneide an dem Schneidwerkzeug den gesamten Austritts-Strömungsquerschnitt überstreichen kann. Die Welle kann in einem Außengehäuse und anschließend in dem innenliegenden Zentralkörper verlaufen, ohne das Produkt zu berühren. Sofern der Zentralkörper durch eine Eindrückung oder Umformung des Strömungskanals oder des Düsengehäuses ausgebildet wird, verläuft die Welle stets außerhalb des Düsengehäuses auf der Außenseite in einer durch die Eindrückung ausgebildeten Falte oder Einstülpung und berührt die Außenseite des Gehäuses vorzugsweise nicht.

Die Antriebswelle selbst kann verschiebbar ausgebildet sein, so dass auch das Schneidwerkzeug verschiebbar relativ zu dem Auslass gelagert ist. Somit kann auf Stoffschwankungen oder Verblockungen reagiert werden, ohne den Stoffstrom oder die Zerkleinerung desselben unterbrechen zu müssen. Die Antriebswelle kann ebenfalls federbelastet in Richtung auf den Auslass gelagert sein, so dass bei Auftreffen von festen Materialien auf das Schneidwerkzeug oder Schneiden des Schneidwerkzeuges eine Axialverlagerung von dem Auslass weg ermöglicht wird und nach Beseitigung des Hindernisses eine Rückkehr in die Ausgangsstellung erfolgt. Die Antriebswelle kann auch als biegsame Welle ausgebildet sein.

Der Austritts-Strömungsquerschnitt kann in einer Ausführungsform als einzelner, unterbrochener Ringspalt ausgebildet sein, wobei der Zentralkörper an dem Austritts-Strömungsquerschnitt einen einzigen Steg ausbildet. Über den Steg wird der Ringspalt unterbrochen. Der Steg kann in Abhängigkeit von den Materialeigenschaften des zu zerkleinernden Stoffes zwischen 1 Grad und 180 Grad, vorzugsweise zwischen 60 Grad und 10 Grad, insbesondere zwischen 25 Grad und 15 Grad des Gesamtumfanges betragen, wobei die Form und Abmessungen des Steges die entstehenden Formkörper oder Pellets in ihrer Form beeinflussen. Die Länge der Pellets wird durch das Bogenmaß beziehungsweise den Anteil am Umfang des unterbrechungsfreien Teils des Ringspaltes an dem Austritts-Strömungsquerschnitt bestimmt. Die Kontur des Steges kann sich in Strömungsrichtung verändern, insbesondere kann die Stegbreite oder Steghöhe sich verringern oder verbreitern, um eine verbesserte Abtrennung und ein Ablösen von dem Schneidelement zu erreichen.

Der Ringspalt muss keinen konstanten Kreisradius oder einen konstanten Kompromissradius aufweisen, vielmehr besteht die Möglichkeit, dass der unterbrochene Ringspalt verschiedene mittlere Kreisradien an dem Anfang und dem Ende aufweist, um so die Schnittgeometrien und Ablösungsverhalten des Materials zu beeinflussen.

Der Zentralkörper kann als Kegel mit einem an einem an der Mantelfläche angeordneten oder ausgebildeten Steg ausgebildet sein, der in den Strömungskanal eingepasst oder darin eingeformt ist. Bevorzugt geht der Eintritts-Strömungsquerschnitt kontinuierlich in den Austritts-Strömungsquerschnitt über, insbesondere bleibt die Fläche des Strömungsquerschnittes entlang des Strömungskanals im Wesentlichen gleich. Die Differenz zwischen den Innendurchmesser, der Innenwand und dem Außendurchmesser des Zentralkörpers kann sich über den Umfang verändern, bleibt jedoch vorzugsweise gleich.

In einer Weiterbildung der Erfindung sind zum Erzeugen von Sollbruchstellen in den pastösen Stoff an dem Auslass, insbesondere in dem Ringspalt, Vorsprünge angeordnet oder ausgebildet, die in den Ringspalt im Austritts-Strömungsquerschnitt hineinragen. Aufgrund der durch die Umformung des pastösen Stoffes an der Außenseite entstehenden Zugspannungen ist es vorteilhaft, wenn die Vorsprünge von dem Außenumfang, also von der Innenwand des Düsengehäuses in den Austritts-Strömungsquerschnitt hineinragen. Die Vorsprünge können in dem Gehäuse selbst ausgebildet oder in Gestalt eines Aufsatzes nach dem Austritt und vor dem Schneiden des pastösen Materials angeordnet sein. Der Aufsatz auf das Gehäuse dient zum Formen, Einritzen oder Verpressen oder auch Leiten des Stoffstromes zu den Schneiden des Schneidwerkzeuges. Die Vorsprünge dienen zur Erzeugung von Sollbruchstellen in dem pastösen Stoff und in dem zerkleinerten, in Pelletform vorliegenden Formkörper, über die die Länge von Bruchstücken nach einer beispielsweisen Trocknung und mechanischen Belastung vorbestimmt werden kann. Damit an den Vorsprüngen keine Störstoffe anhaften können, ist es vorteilhaft, diese entgegen der Strömungsrichtung des Stoffes verjüngend keilförmig auszubilden.

Das Schneidwerkzeug weist zumindest eine von innen nach außen, entgegen der Rotationsrichtung geneigte Schneide auf. Die Schneide kann gebogen sein, ähnlich einer Rückenflosse, einer Finne oder einem Säbel. Es können mehrere rotationssymmetrisch angeordnete Schneiden an dem Schneidwerkzeug vorhanden sein, wobei die Schneiden von der Antriebswelle oder einem Direktantrieb in Rotationen versetzt werden. Die Schneiden können auswechselbar an dem Schneidwerkzeug angeordnet sein und können in einem vorbestimmten Winkel zur Ebene des Schneidwerkzeuges auf dem Umfang des Schneidwerkzeuges angeordnet sein. Über den Winkel der Schneiden lässt sich einstellen, wie weit eine Trennung von dem nachfolgenden Materialstrom erfolgt. Die Anzahl der Schneiden richtet sich nach der erforderlichen Drehzahl, um die jeweils gewünschte Breite der Pellets oder der zu erzeugenden Formkörper zu bestimmen. Üblicherweise werden ein bis vier rotierenden Schneiden eingesetzt, die mit einer verschleißreduzierenden Beschichtung versehen sein können. Die Schneiden weisen vorzugsweise eine Schräge auf, die von der Düse weg weist, um einen zusätzlichen Trennimpuls bereitzustellen.

Das Schneidwerkzeug kann in Förderrichtung axial beabstandet zu dem Zentralkörper und zu dem Düsengehäuse gelagert sein, so dass die Schneiden das Düsengehäuse und den Zentralkörper oder einen daran befindlichen Aufsatz nicht berühren. Dadurch wird der Verschleiß des Schneidwerkzeuges und des Aufsatzes verringert. Alternativ zu einer Ausgestaltung des Schneidwerkzeuges mit klingenartigen oder säbelartigen Schneiden können auch Schneidelemente wie Drähte oder Schnüre an dem Schneidwerkzeug angeordnet sein oder durch Luft, Dampf oder Flüssigkeitsstrahlen ausgebildet werden, die das pastöse Material schneiden.

Um optional unterschiedliche Dicken der zu erzeugenden Formkörper oder Pellets erzeugen zu können, kann die Anordnung der Schneiden oder Schneidelemente unregelmäßig an dem Umfang des Schneidwerkzeuges gestaltet sein, wodurch in einem Arbeitsgang unterschiedlich dicke Chargen an Pellets oder Formkörpern erzeugt werden können.

Durch die Axialbeabstandung von dem Zentralkörper, dem Steg und dem Düsengehäuse bewegt sich die Schneide oder bewegen sich die Schneiden oder Schneidelemente ausschließlich in dem pastösen Stoff und nicht vergleichbar einer Schere berührend auf dem Gehäuse, dem Steg, dem Aufsatz oder dem Zentralkörper. Dies verringert den Verschleiß der Messer, und die Beeinflussung der erzeugten Formkörper oder Pellets durch die Messer ist minimal.

Um ein Wegschleudern der abgeschnittenen Formkörper zu erleichtern, sind die Schneiden in einem Winkel zur Rotationsebene des Schneidwerkzeuges einstellbar ausgerichtet. Der Winkel der Schneiden zur Ebene des Rotationswerkzeuges beträgt zwischen 0 und 60 Grad, vorzugsweise zwischen 2 Grad und 15 Grad und richtet sich insbesondere nach der zu erwartenden Drehungsgeschwindigkeit und der Ausströmgeschwindigkeit des pastösen Stoffes.

Bevorzugt umgibt der Ringspalt beziehungsweise die Kontur des Ringspaltes den Zentralkörper um mehr als 180 Grad. Bei einer Zentralanordnung des Schneidwerkzeuges liegt die Drehachse des Schneidwerkzeuges im Wesentlichen im Zentrum des Ringspaltes oder im Mittelpunkt des Ringspaltes, sofern dieser kreisförmig ausgebildet ist. Die Drehachse des Schneidwerkzeuges wird somit ebenfalls von dem Ringspalt um mehr 180 Grad umgeben.

Das erfindungsgemäße System mit einer Schneidvorrichtung, wie sie oben beschrieben worden ist, und eine Weiterverarbeitungseinrichtung sieht vor, dass die Schneidvorrichtung an der Weiterverarbeitungseinrichtung angeordnet ist, wobei in der Weiterverarbeitungseinrichtung der getrennte, zerkleinerte, pastöse Stoff, der nunmehr in Form von Formkörpern oder Pellets vorliegt, weiterverarbeitet wird. Unter Trennen, Schneiden, Zerkleinern oder Teilen wird allgemein das Auflösen eines Stoffzusammenhanges verstanden, so dass ein getrennter Formkörper entsteht. Als zu verarbeitende Stoffe können pastöse Biomassen oder Mehrphasengemische eingesetzt werden, insbesondere auch druck-, temperatur- oder scherempfindliche oder dilatante oder abrasive Massen, deren Trennung einen hohen Verschleiß von Extrudern, Pumpen und Matrizen hervorrufen kann sowie pastöse Massen mit einem hohen Faseranteil und sehr langen und schwer schneidbaren Fasern, Haaren oder Störstoffen, bei denen andere Schneideinrichtungen verblocken würden oder aufwendige Trenn- oder Schneideinrichtungen vor den Austrittsöffnungen vorgehalten werden müssen. Das System sieht insbesondere eine Trocknung bei der Verarbeitung entwässerter Schlämme, insbesondere Klärschlämme vor. Die Pellets können thermisch, mechanisch oder chemisch behandelt werden oder reagieren, anschließend oder teilweise gleichzeitig können sie geröstet, frittiert, getrocknet, granuliert, fluidisiert, pneumatisch transportiert, gelagert, gekühlt, erwärmt, gemischt homogenisiert oder in eine neue, chemische Lösung eingebracht oder erhärtet bzw. ausgehärtet werden. Neben einer Verwendung für Abwässer- oder in der Schlammbehandlung kann das System auch zur Herstellung von Lebensmitteln, Futtermitteln, Baustoffen und ähnlichen Zwischen- und Endprodukten eingesetzt werden. Vorteilhafterweise werden durch die Schneideinrichtung gleichmäßige, gleichförmige Formkörper hergestellt, die in der Regel bei einer runden Ausgestaltung oder einer angenähert runden Ausgestaltung des Ringspaltes als gebogenes Parallelepiped beschrieben werden können. Es entsteht ein unterbrochen-ringförmiges, gebogenes Parallelepiped bei Verwendung eines unterbrochenen Ringspaltes, sofern ein vollständiger Ringspalt vorhanden ist, entsteht eine Wendel. Die Form der erzeugten Pellets ist abhängig von der Form der Austrittsöffnung, dem Vorhandensein oder Nichtvorhandensein von Schneidelementen, die in den Ringspalt hineinragen und Sollbruchstellen erzeugen, sowie der Breite, des Winkels, des Versatzes der Kreisradien von Anfang und Ende des unterbrochen ringförmigen Austritts und Ausführungen des Steges. Weitere Einflussgrößen sind die eingesetzten Stoffe, die Strömungsgeschwindigkeit des Stoffes, die Richtung der Ausströmung sowie der Anordnung, Ausführung und Anzahl der Schneiden auf dem Schneidwerkzeug sowie deren Orientierung, die Temperatur der Düse und die Umgebungsbedingungen der Weiterverarbeitungseinrichtung.

In der Weiterverarbeitungseinrichtung kann ein Unter- oder Überdruck herrschen, der auch an dem Austritts-Strömungsquerschnitt anliegt. Durch die Förderung in einen Überdruckraum der Weiterverarbeitungseinrichtung wird der pastöse Formkörper ohne Druckveränderung in die Weiterverarbeitungseinrichtung transportiert. Dies führt dazu, dass die in der Regel noch feuchten und klebrigen Formkörper direkt in einer Überdruckatmosphäre verarbeitet werden können, ohne dass sie wieder aneinander anhaften können oder eine separate Transporteinrichtung und eine Druckschleuse, insbesondere eine Zellenradschleuse, in eine Überdruckumgebung eingeführt werden müssten. So können bspw. ein direkter Eintrag in einen Trockner, insbesondere einen Wirbelschichtverdampfungstrockner, eine Rösteinrichtung oder eine Frittiereinrichtung, Granuliereinrichtung, Fluidisierungseinrichtung, Kühleinrichtung, einen Mischer oder Homogenisierer erfolgen, wobei sich die Transportstrecke verringert, keine nachträgliche Anhaftung der erzeugten Formkörper aneinander ergibt und insbesondere bei Wirbelschichtverdampfungstrocknern oder Fluidisierungseinrichtungen kaum eine Wandberührung mit Anhaftungen erfolgt. Ebenso kann der Stoff in eine Unterdruckatmosphäre gefördert werden, wobei sich hier das Problem der Anhaftung voneinander getrennter Formkörper nicht oder weniger dringlich stellt.

Ein Verfahren zum Zerkleinern von pastösen Stoffen sieht unter anderem die Schritte des Durchleitens eines pastösen Stoffes durch eine Düse vor, wobei die Querschnittsform des pastösen Stoffes während des Durchtritts durch die Düse von einem Einlass zu einem Auslass der Düse von einem Eintritts-Strömungsquerschnitt zu einem davon abweichenden Austritts-Strömungsquerschnitts verändert wird. Der pastöse Stoff wird aus dem Auslass der Düse mit dem Austritts-Strömungsquerschnitt herausgedrückt und während seines Austrittes und/oder nach seinem Austritt aus dem Auslass mit einem rotierendem Schneidwerkzeug geschnitten oder getrennt wird, wobei der pastöse Stoff zu einem langgestreckten Pellets geschnitten und der Schnitt quer zur Austrittsrichtung des pastösen Stoffes und entlang einer langen Seite des Pellets ausgeführt wird, sodass die Schnittfläche eine Langseite bildet. Anders als bei den Schneideinrichtungen und den Schneidverfahren gemäß dem Stand der Technik erfolgt die Vereinzelung und Ausgestaltung des Formkörpers mit einem rotierenden Schneidelement quer zur Richtung und entlang einer langen Seite eines langgestreckten, gebogenen oder polydiagonal geformten Pellets an dessen langer Seite. In Folge des Schnittes entlang der langen Seite kommt es zu einer Verdichtung der langen Schnittflächen, einer Glättung der Oberfläche entlang der Schnittfläche und damit zu einer zusätzlichen Stabilisierung der Seitenflächen der noch pastösen Formkörper. Die Länge der Formkörper wird dabei durch das Bogenmaß bzw. den Umfangsanteil des unterbrechungsfreien Teils des Ringspaltes bestimmt und nicht durch die Ausströmgeschwindigkeit der austretenden Stränge wie beim Stand der Technik oder durch die Umdrehungsgeschwindigkeit des rotierenden Schneidelements. Erfindungsgemäß wird die Breite des Formkörpers durch die Ausströmgeschwindigkeit des Stoffes bestimmt und durch die Anzahl und die Drehgeschwindigkeit der Schneiden. Die Höhe des Formkörpers und des Pellets wird durch die Höhe des Ringspaltes definiert.

Vorteilhafterweise wird der pastöse Stoff durch den Austritts-Strömungsquerschnitt in Gestalt eines offenen Ringspalts hindurchgedrückt, sodass sich nach dem Umlauf einer Schneide entlang des Austritts-Strömungsquerschnitts eine automatische Abtrennung des Formkörpers ergibt.

Der pastöse Stoff wird von dem Einlass bis zu dem Austritts-Strömungsquerschnitt bevorzugt kontinuierlich formändernd umgelagert, ohne dass eine Aufteilung in unterschiedliche Stoffströme erfolgt. Der pastöse Stoff kann von einem runden Eintritts-Strömungsquerschnitts zu einem offenen oder geschlossenen ringförmigen Austritts-Strömungsquerschnitts umgelagert werden, sodass die Erzeugung von Formkörpern durch eine Diagonalteilung einer austretenden gebogenen Stofffläche erfolgt. Die Bildung der gebogenen Fläche, die durch die Schneiden des Schneidwerkzeuges von dem pastösen Stoffstrom getrennt werden, folgt nicht durch Extrusion, sondern durch eine entlang der Förderrichtung vorgenommene Umlagerung, Umleitung oder Umlenkung des Stoffstromes.

Zur Erzeugung von Sollbruchstellen werden beim Austreten des pastösen Stoffes an dessen Außenseite Vertiefungen in den anschließend geschnittenen Pellets erzeugt. Die Schnittgeschwindigkeit des Schneidwerkzeuges ist bevorzugt größer als die Austrittsgeschwindigkeit des pastösen Stoffes eingestellt, sodass gewährleistet bleibt, dass die Länge des Formkörpers durch das Bogenmaß bzw. die Länge des Ringspaltes vorbestimmt wird und nicht durch die Ausströmgeschwindigkeit des pastösen Materials.

Nachfolgend wird die Erfindung anhand der Figuren näher erläutert. Es zeigen:
- Figur 1: eine perspektivische Ansicht eines Schneidwerkzeuges;
- Figur 2: eine Schnittdarstellung der Figur 1;
- Figur 3: eine Draufsicht auf einen Auslass;
- Figur 4: eine Variante einer Auslassgestaltung;
- Figur 5: Darstellungen erzeugter Formkörper;
- Figur 6: eine schematische Darstellung der Erzeugung der Formkörper in Draufsicht;
- Figur 7: eine Schnittdarstellung einer Variante einer Schneideinrichtung mit einem Gehäuse und einem separaten Zentralkörper;
- Figur 8: eine perspektivische Teilschnittdarstellung der Ausführungsform gemäß Figur 7;
- Figur 9: eine perspektivische Ansicht eines Gehäuses mit eingesetztem Zentralkörper;
- Figur 10: eine Rückansicht der Figur 7; sowie
- Figur 11: das Düsengehäuse in Einzeldarstellung.

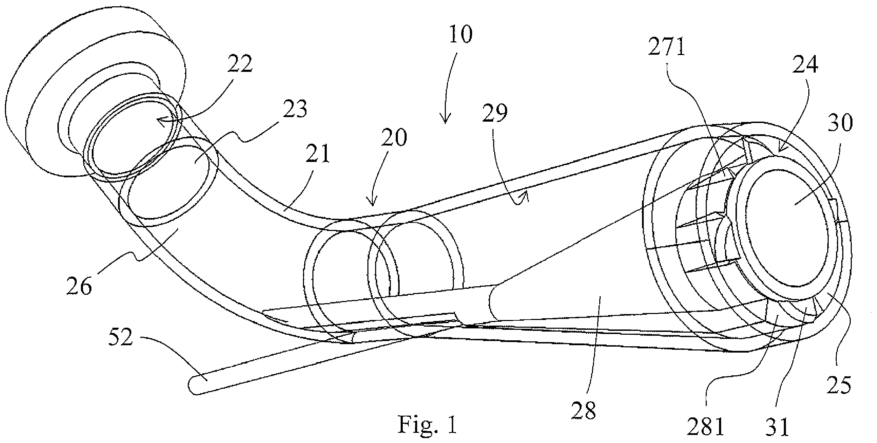

Figur 1 zeigt in einer perspektivischen, teiltransparenten Ansicht eine Schneidvorrichtung 10 zum Zerkleinern von pastösen Stoffen mit einer Düse 20, die ein Düsengehäuse 21 aufweist. In dem dargestellten Ausführungsbeispiel ist das Düsengehäuse 21 als ein Rohr mit einer Biegung ausgebildet. Die Düse 20 weist einen im Einlass 22 mit einem Eintritts-Strömungsquerschnitt 23 auf, der zur besseren Darstellbarkeit leicht versetzt eingezeichnet ist. Von dem Einlass 22 wird das zu zerkleinernde pastöse Material durch den in dem Düsengehäuse 21 gebildeten Strömungskanal 26 in Richtung auf einen Auslass 24 mit einem Auslass-Strömungsquerschnitt 25 gefördert. Dies kann durch eine Pumpe oder ähnliches geschehen, die an der Düse 20 angeschlossen und der Schneidvorrichtung 10 vorgelagert ist. An dem Auslass 24 ist ein rotierendes Schneidwerkzeug 30 mit vier Schneiden 31 angeordnet. Das Schneidwerkzeug 30 wird über eine Antriebswelle 52 angetrieben, die aus dem Düsengehäuse 21 im Bereich der Biegung herausgeführt ist. Die Antriebswelle ist innerhalb des Strömungskanals 26 in einem Zentralkörper 28 gelagert, der zusammen mit einer Innenwand 29 des Düsengehäuses 21 den Auslass-Strömungsquerschnitt 25 bildet. Der Zentralkörper 28 erstreckt sich von dem Auslas 24 entgegen der Förderrichtung in den Strömungskanal 26 hinein. In dem dargestellten Ausführungsbeispiel ist der Zentralkörper 28 kegelförmig ausgebildet und weist an seiner Mantelfläche einen Steg 281 auf, der an der Innenwand 29 des Düsengehäuses 21 anliegt. An die Kegelspitze des Zentralkörpers 28 schließt sich eine Verlängerung an, die bis zu der Innenwand 29 reicht und daran oder darin ausläuft, so dass ein kontinuierlicher oder nahezu kontinuierlicher Übergang von dem im Wesentlichen kreisförmigen Eintritts-Strömungsquerschnitt 23 zu dem als unterbrochener Ringspalt 27 ausgebildeten Auslass-Strömungsquerschnitt stattfindet. Die Verlängerung kann separat von dem kegelförmigen Zentralkörper 28 gefertigt sein, vorzugsweise bildet der Zentralkörper 28 einen Einsatz oder eine Einformung, die ohne weitere Einbauten eine Umlagerung des Materialstromes von dem Einlass 22 zum Auslass 24 ohne eine Aufteilung in zwei getrennte Stoffströme vornimmt.

Die Querschnittsfläche innerhalb des Strömungskanals 26 bleibt von dem Einlass 22 bis zum Auslass 24 gleich oder verringert sich zumindest nicht, auch wenn sich die Form des Strömungsquerschnittes von dem Einlass 22 zu dem Auslass 24 ändert.

An dem Zentralkörper 28 sind im Bereich des Auslasses 24 radial in den Auslass-Strömungsquerschnitt hinein ragende Vorsprünge 271 angeordnet, die als Schneiden oder als Eindrückelemente ausgebildet sind und Einschnitte oder Vertiefungen in der Oberfläche des zu erzeugenden Formkörpers ausbilden, so dass dort Sollbruchstellen entstehen, über die eine definierte Bruchstelle und damit auch eine gleichmäßige Länge der Teilstücke aus dem Formkörper erreicht werden kann. Die Vorsprünge 271 können an einem Aufsatz, Aufsatzring oder an einer Manschette an dem Zentralkörper 28 angeordnet sein. Der Aufsatz oder die Manschette kann auswechselbar an dem Zentralkörper 28 angeordnet sein, um unterschiedliche Abstände der Sollbruchstellen oder unterschiedliche Geometrien erzeugen zu können und um bei Verschleiß ein Auswechseln zu ermöglichen.

Alternativ oder ergänzend zu den Vorsprüngen 271 an dem Zentralkörper 28 können solche Vorsprünge auch von außen, also von der Innenwand 29 des Düsengehäuses 21 in den Auslass-Strömungsquerschnitt hineinragen. Auch diese Vorsprünge können separat hergestellt und über einen Aufsatz, Aufsatzring oder Einsatz an dem Düsengehäuse 21 befestigt sein. Alternativ können solche Vorsprünge auch einstückig ausgebildet sein.

Die Schneiden 31 an dem Schneidwerkzeug 30 sind entgegen der Drehrichtung, die durch den Pfeil angedeutet ist, nach hinten gebogen, so dass sich eine finnenartige oder säbelartige Schneidenkontur ergibt. Die Schneiden 31 weisen eine Abschrägung auf, die von dem Düsengehäuse 21 weg zeigt, um einen Trennimpuls oder eine Trennkraft aufzubringen, wenn die pastöse Masse geschnitten oder getrennt wird. Dadurch wird eine erleichterte Trennung und eine verbesserte Vereinzelung des abgeschnittenen Formteils von dem nachfließenden, durch den Strömungskanal 26 gepressten Materialstrom erreicht.

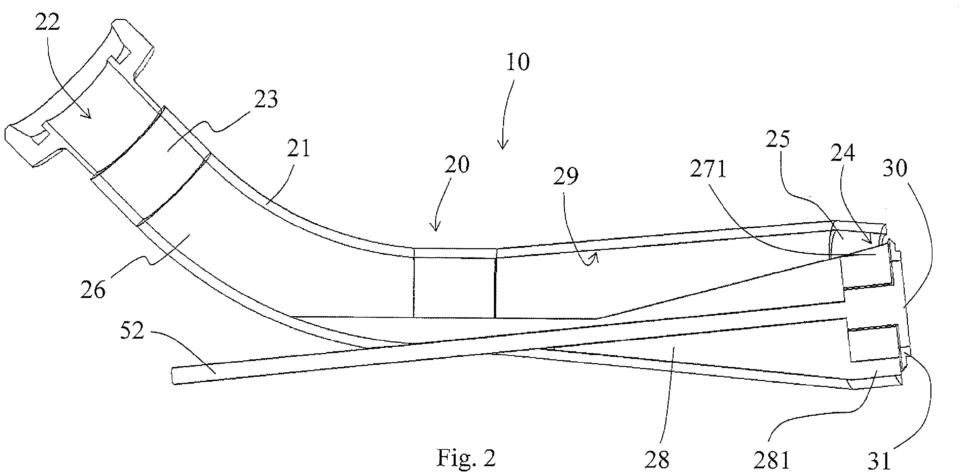

Figur 2 zeigt die Schneidvorrichtung gemäß Figur 1 in einer Schnittdarstellung. Der Einlass 22 und der Auslass 24 sind an entgegengesetzten Enden der Düse 20 ausgebildet. Innerhalb des Strömungskanals 26, der von dem rohrförmigen Düsengehäuse 21 gebildet wird, ist der Zentralkörper 28 angeordnet, der eine im Wesentlichen kegelförmige Kontur aufweist. Durch den Zentralkörper 28 ist die Antriebswelle 52 geführt, die das Schneidwerkzeug 30 mit den Klingen 31 antreibt. Die Klingen 31 überstreichen den Auslass-Strömungsquerschnitt 25, der in Gestalt eines unterbrochenen Ringspaltes ausgebildet ist, vollständig. Die Antriebswelle 25 ist abgedichtet gegenüber dem in den Strömungskanal 26 transportierten Material gelagert, so dass ein außerhalb des Düsengehäuses 21 angeordneter motorischer Antrieb nicht in Kontakt mit dem pastösen Stoff treten kann. Die Antriebswelle 52 kann axial verschieblich innerhalb des Zentralkörpers 28 gelagert sein, bevorzugt mit einer Federkraft in Richtung auf die dargestellte Grundstellung gelagert. Für den Fall, dass ein Störgegenstand oder eine massive Komponente gegen eine Schneide 31 des Schneidwerkzeuges 30 stößt, kann somit das Schneidwerkzeug 30 in Förderrichtung verlagert werden, damit der Gegenstand austreten und anschließend der Schneidvorgang fortgesetzt werden kann.

Der Figur 2 ist zu entnehmen, dass die Schneiden 31 beabstandet zu dem Auslass 24 aus der Düse 20 angeordnet sind und somit nicht an dem Gehäuse 21 oder dem Zentralkörper anliegen oder daran entlanggleiten. Es wird ausschließlich das pastöse Material durch die Schneiden zertrennt, so dass eine Verschleißverringerung erreicht werden kann.

In der Figur 2 ist der Zentralkörper 28 als separates Bauteil dargestellt, das in das Düsengehäuse 21 eingeschoben und daran festgelegt ist. An dem kegelförmigen Zentralkörper 28 ist ein Steg 281 angeformt oder angeordnet, der dafür sorgt, dass im Bereich des Auslasses 24 der Auslass-Strömungsquerschnitt als unterbrochener Ringspalt, im dargestellten Ausführungsbeispiel als kreisförmiger, unterbrochener Ringspalt ausgebildet ist. Es können auch andere Ringspaltformen vorhanden sein, beispielsweise polygonale Formen oder ovale Formen. Alternativ zu einer zweiteiligen oder mehrteiligen Ausgestaltung der Düse 20 mit dem Zentralkörper 28 können diese auch einteilig ausgebildet sein, beispielsweise in einem Gussverfahren oder in einem Umformverfahren, bei dem ein zunächst rohrförmiges Grundteil als Düsengehäuse 21 genommen und der Zentralkörper 28 nach innen eingebogen oder eingeformt wird. Um die Querschnittskonstanz beizubehalten, ist das Düsengehäuse 21 über die Förderrichtung in Richtung zum Auslass 24 hin im Umfang vergrößert, so dass das pastöse Medium nicht innerhalb der Düse 20 gestaut wird. Da sich der Zentralkörper 28 von der Innenwand 29 in Richtung des Strömungskanals 26 hinein erstreckt und in Förderrichtung volumenvergrößernd, vorzugsweise kontinuierlich volumenvergrößernd ausgebildet ist und in den Strömungskanal hineinragt, wird der Stoffstrom an der Innenwand 29 und der Außenkontur des Zentralkörpers 28 anliegend umgelagert und umgeformt, bis die Form des Auslass-Strömungsquerschnitts 25 erreicht wird.

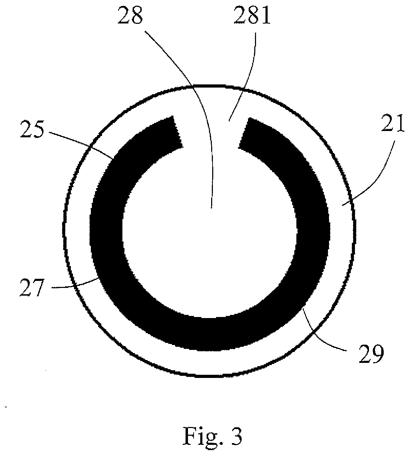

In der Figur 3 ist eine Variante einer möglichen Auslassöffnung als unterbrochener Ringspalt 27 dargestellt. Der Auslass-Strömungsquerschnitt 25 wird durch die Außenkontur des Zentralkörpers 28 und die Innenwand 29 des Düsengehäuses 21 gebildet. Über den Steg 281 wird die Ringform des Spaltes unterbrochen. Die Endkonturen des Ringspaltes 27 werden durch die Form des Steges 28 ausgebildet. Die Länge des zu erzeugenden Formkörpers wird im Wesentlichen durch die Länge des Ringspaltes bzw. des Bogenmaßes der unterbrochenen Auslassöffnung definiert.

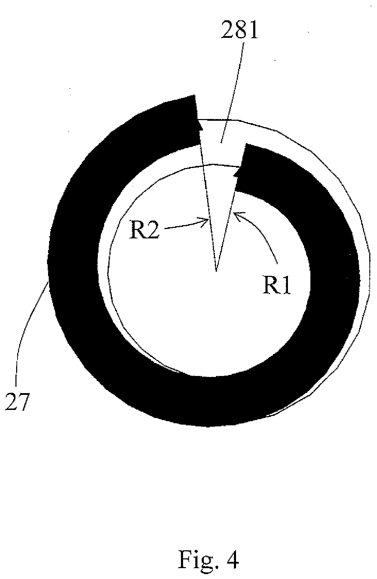

Alternativ zu der Ausführungsform mit einem im Wesentlichen konstanten Radius des Ringspaltes 27 ist in der Figur 4 eine Variante gezeigt, bei der der Steg 281 unterschiedliche Kreisradien R1, R2 ausbildet. Als Bezugsradius wird jeweils die Mitte des Ringspaltes 27 angenommen. Der Ausgangsradius R1 ist kleiner als der Endradius R2, wenn sich das nicht dargestellte Schneidelement in Pfeilrichtung dreht. Der Radius ändert sich von dem Anfangsradius R1 zum Endradius R2 im dargestellten Ausführungsbespiel kontant, so dass sich eine spiralartige Form des erzeugten Formlings nach dem Abschneiden ergibt. Zur Erzeugung möglichst gleichmäßiger Formlinge oder Pellets ist eine kontinuierliche Veränderung des Radius sinnvoll. Grundsätzlich können aber auch abweichende Formgestaltungen des Ringspaltes 27 bzw. des unterbrochenen Ringspaltes 27 eingesetzt werden.

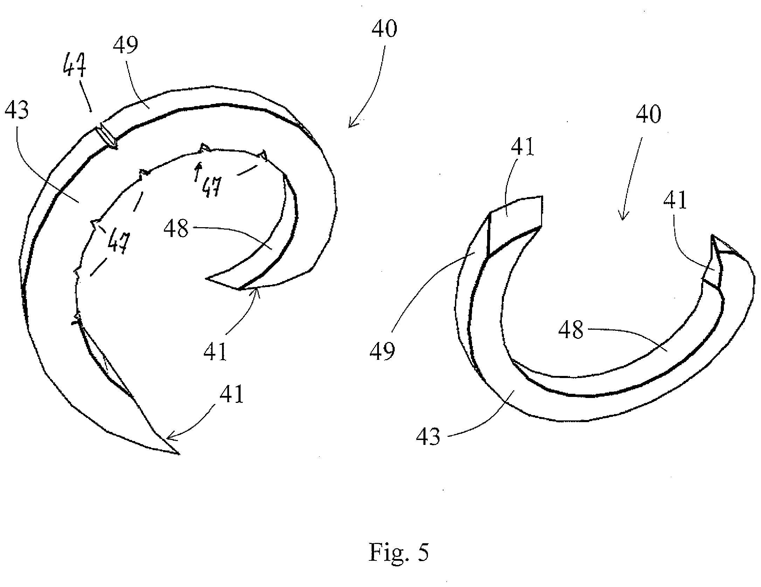

Figur 5 zeigt zwei Ansichten des durch den Schneidvorgang erhaltenen Formlings 40 oder Pellets. In der dargestellten Ausführungsform wurde das pastöse Material durch einen Ringspalt, wie er in der Figur 3 gezeigt ist, hindurchgepresst und quer zur Austrittsrichtung von dem rotierenden Schneidwerkzeug 30 abgeschnitten. Es ergibt sich ein unterbrochenes, ringförmig gebogenes Parallelepiped, bei dem die Länge im Wesentlichen durch die Länge des Ringspaltes definiert wird. Der Formling weist zwei Stirnseiten 41 auf, die durch den Steg 281 gebildet sind, an denen der Stoffstrom des pastösen Materials voneinander getrennt und gebogen aus dem Auslass 24 herausgedrückt wird. Der Querschnitt der Stirnseiten ist ein Parallelepiped, insgesamt sind vier Längsseiten vorhanden, eine äußere Seite 49, die am Austritt an der Innenseite 29 des Düsengehäuses 21 anliegt. Die Innenseite 48 liegt an der Außenseite des Zentralkörpers 28 an und liegt der Außenseite 49 gegenüber. Weiterhin sind zwei einander gegenüberliegende Langseiten 43 ausgebildet, die sich in der Längserstreckung des Formkörpers 40 ausbilden und durch die Schneiden 31 des Schneidwerkzeuges 30 durch auseinanderfolgende Schnitte gebildet sind. Mit der erfindungsgemäßen Vorrichtung wird somit durch einen quer zur Austrittsrichtung ausgeführten rotierenden Schnitt entlang einer Längsseite 43 des zu erzeugenden Formkörpers 40 eine Trennung von dem nachfolgenden Materialstrom erreicht.

Die Form des Formkörpers 40 ist zunächst abhängig von der Form des Ringspaltes 27 oder des Auslass-Strömungsquerschnitts 25. Sofern ein Aufsatz oder Einsätze innerhalb des Auslass-Strömungsquerschnittes 25 vorhanden sind, können über darin befindliche Elemente, wie Schneiden Sollbruchstellen 47 oder Eindrückungen in der Außenlangseite 49 oder der Innenlangseite 48 eingearbeitet werden. Die Dicke des Raumkörpers 40 wird insbesondere durch die Strömungsgeschwindigkeit des pastösen Stoffes und die Umdrehungszahl des Schneidwerkzeuges zusammen mit der Anzahl der Schneiden 31 sowie deren Orientierung und Anordnung auf dem Umfang des Schneidwerkzeuges beeinflusst. Im Unterschied zu anderen Pelletiervorrichtungen befinden sich die Schnittflächen 43 der Formkörper 40 nicht an den Stirnseiten 41, sondern an den Längsseiten 43 der Pellets.

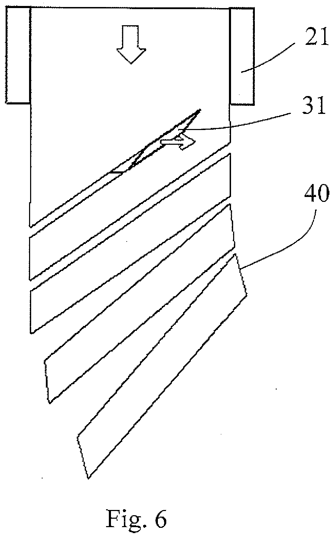

Figur 6 zeigt eine schematische Draufsicht auf einen austretenden Stoffstrom, der aus dem Düsengehäuse 21 heraustritt. Der Ringspalt ist gebogen, so dass sich eine gebogene Stofffläche in die Bildebene hinein ergibt. Die Schneide 31 bewegt sich in Pfeilrichtung nach rechts, während sich der Stoffstrom in Förderrichtung gemäß Pfeilrichtung nach unten bewegt. Durch eine Schrägeinstellung der Schneide 31 erfolgt eine Diagonalteilung einer austretenden, gebogenen Stofffläche. Aufgrund der Winkelstellung der Schneide 31 ergibt sich ein in Förderrichtung wirkender Kraftanteil, so dass der abgeschnittene Formling 40 wie dargestellt von dem nachfolgenden Stoffstrom abgetrennt und mit einem leichten Drehimpuls von dem Düsenaustritt weg bewegt wird.

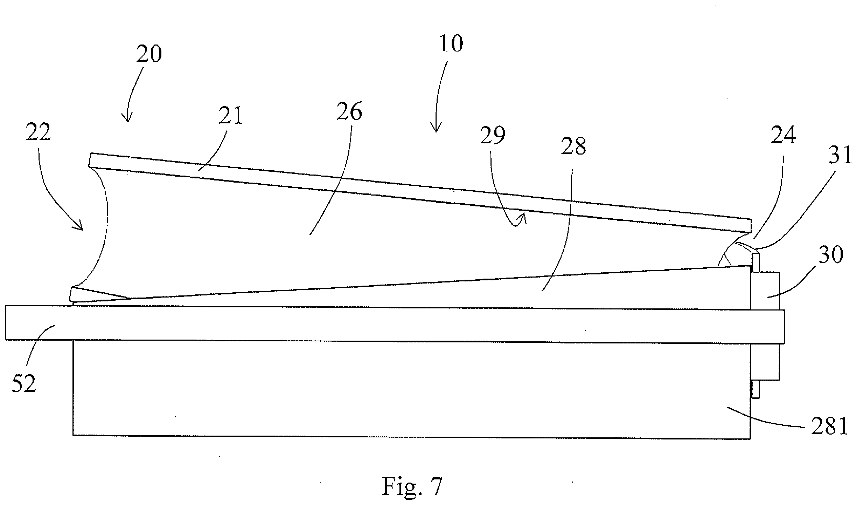

In der Figur 7 ist eine schematische Schnittdarstellung der Schneidvorrichtung 10 gezeigt, bei der die Düse aus einem sich kontinuierlich konisch erweiternden Rohr als Düsengehäuse 21 ausgebildet ist. Der Einlass 22 weist gegenüber dem Auslass 24 einen geringeren Durchmesser auf. Innerhalb des Düsengehäuses 21 ist ein kegelförmiger Zentralkörper 28 eingesetzt, der in einem später erläuterten Schlitz des Düsengehäuses 21 eingesetzt und an dem Düsengehäuse 21 festgelegt ist. Der Zentralkörper 28 weist einen nach unten gerichteten Steg 281 auf, der das Düsengehäuse 21 durchdringt und bis zur auslassseitigen Endfläche des Zentralkörpers 28 reicht. Über den Steg 28 wird der ansonsten durch den kegelförmigen Zentralkörper 28 gebildete, umlaufende Ringspalt unterbrochen. Da der kegelförmige Zentralkörper 28 das Düsengehäuse 21 durchdringt, ragt der Zentralkörper 28 von der Innenwand 29 von der Einlassseite kommend zunehmend in den Strömungskanal 26 hinein und kompensiert vollständig oder nahezu die sich vergrößernde Querschnittsfläche aufgrund der Vergrößerung des Düsengehäuses 21 in Auslassrichtung. Damit bleibt die Fläche des jeweiligen Strömungsquerschnittes in Förderrichtung im Wesentlichen konstant, gegebenenfalls vergrößert sie sich, um den bei dem Pumpen durch die Düse 20 entstehenden Druck in dem pastösen Stoff zu entspannen.

Innerhalb des Zentralkörpers 28 ist die Antriebswelle 52 gelagert, gegebenenfalls axial verschieblich, und ragt aus dem Düsengehäuse 21 hinaus, wo sie dann außerhalb des Düsengehäuses 21 angetrieben wird.

An dem Schneidwerkzeug 30 sind säbelartige Schneiden 31 angeordnet, über die das durch den Auslass 24 gepresste Material quer zur Ausströmrichtung und entlang der Langerstreckung der jeweiligen erzeugten Formkörper 40 geschnitten wird. In dem Ausführungsbeispiel der Figur 7 sind das Düsengehäuse 21 und der Zentralkörper 28 als separate Bauteile ausgebildet und ineinander gefügt. Der Austritts-Strömungsquerschnitt wird durch die Außenkontur des Zentralkörpers 28 und die Innenkontur der Innenfläche 29 des Düsengehäuses am Auslass 24 gebildet.

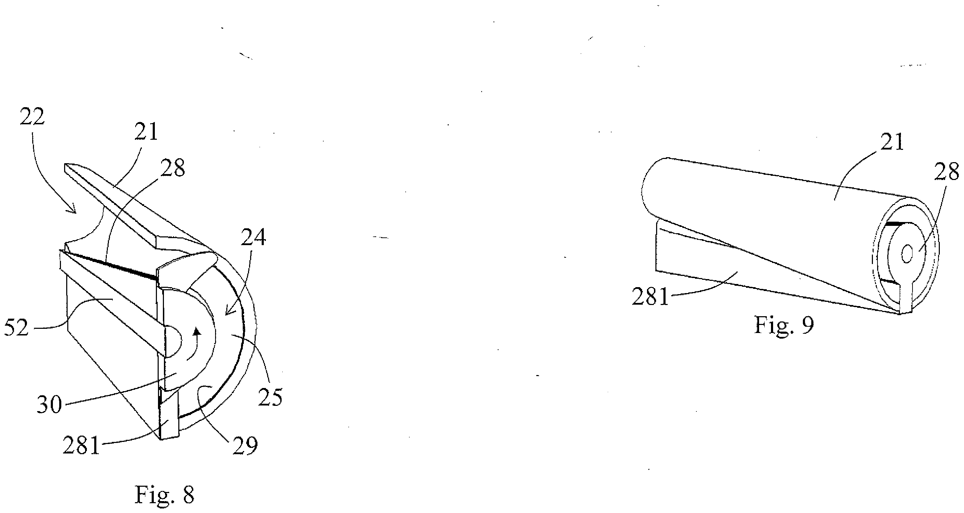

Figur 8 zeigt eine perspektivische Schnittdarstellung der Figur 7, in der zu erkennen ist, dass der kegelförmige Zentralkörper 28 sich kontinuierlich von einer Durchtrittsfläche durch die Innenwand 29 nahe dem Einlass 22 in Richtung auf den Auslass 24 vergrößert, so dass die Querschnittsform des Einlassquerschnittes 23 sich kontinuierlich verändert, bis ein unterbrochener Ringspalt erzeugt wird. Die Längsachse des Kegels ist nicht kollinear zu der Längsachse oder Mittelachse des Düsengehäuses 21 im Auslassbereich, so dass sich über die Länge des Strömungskanals sich verändernde, nicht rotationssymmetrische Strömungsquerschnittsformen ergeben. Innerhalb des Strömungskanals 26 findet keine Trennung oder Aufteilung in zwei voneinander getrennte Stoffströme des durchtransportierten Materials statt, vielmehr wird das transportierte Material umgelagert und umgeformt, bis es in eine gebogene, flache Form gebracht ist. Über den Steg 281 findet eine Trennung der beiden Enden des Ringspaltes statt. Grundsätzlich ist es auch möglich, auf den Steg 281 zu verzichten, so dass ein vollständiger Ringspalt an dem Auslass 24 entsteht. Über die Schneiden 31 oder die zumindest eine Schneide 31 wird dann eine wendelförmige Zerteilung des pastösen Mediums vorgenommen. Eine Trennung in der Länge kann über die eingebrachten Sollbruchstellen bei der Weiterverarbeitung der erzeugten Formlinge erfolgen.

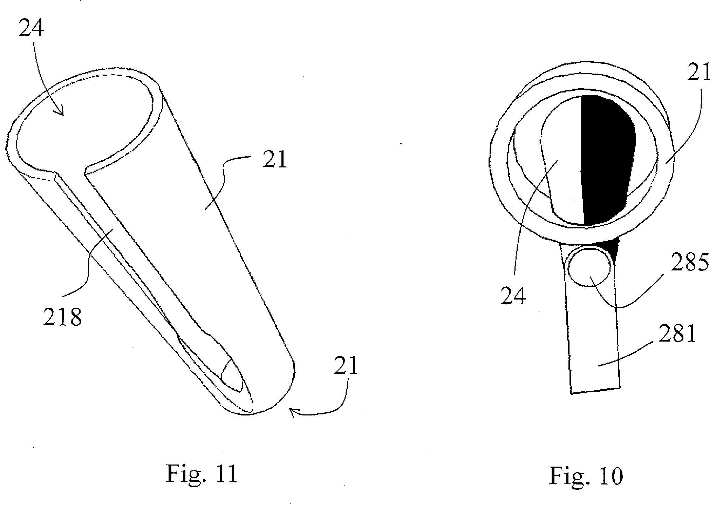

Figur 9 zeigt die Schneidvorrichtung in einem teilmontierten Zustand, bei dem nur das Düsengehäuse 21 mit dem Zentralkörper 28 und dem an der Mantelfläche des kegelförmigen Zentralkörpers 28 angeformten Steg 281 zu sehen ist. Der Zentralkörper 28 wird über einen Schlitz, wie er beispielsweise in der Figur 11 mit dem Bezugszeichen 218 bezeichnet ist, in das Gehäuse eingeführt. Der Steg 281 ragt durch das Düsengehäuse 21 hindurch. Über die separate Ausgestaltung von Zentralkörper 28 und Düsengehäuse 21 können unterschiedliche Varianten des Zentralkörpers 28 mit einem Düsengehäuse 21 als Grundkörper gekoppelt werden. Ebenso können verschlissene Komponenten leichter ausgetauscht werden.

Figur 10 zeigt den Montagezustand gemäß Figur 9 in einer Rückansicht von der Einlassseite aus. Es ist zu erkennen, dass der Zentralkörper 28 mit der kegelförmigen Grundform die Wand des Düsengehäuses 21 durchdringt. Von der Einlassseite zur Auslassseite strömendes Material wird an der Durchdringungsstelle um den Zentralkörper 28 herum bewegt und legt sich an die Innenwand 29 des Düsengehäuses 21 und an die Außenwand des Zentralkörpers 28 und um den Zentralkörper 28 herum, ohne dass eine Stoffstromtrennung erfolgt. Innerhalb des Zentralkörpers 28 ist eine Bohrung 285 zur Aufnahme der Antriebswelle 52 eingearbeitet.

Figur 11 zeigt das Düsengehäuse 21 in einer Einzeldarstellung mit dem in Förderrichtung sich bis zum Auslass 24 erstreckenden Schlitz 218. Der Schlitz 218 ist so geformt, dass der Steg 281 eng aufgenommen wird und der kegelförmige Zentralkörper 28 dicht anliegend an dem Düsengehäuse 21 anliegt, so dass ein dichter Abschluss und ein möglichst kontinuierlicher Übergang von der Innenwand 29 des Düsengehäuses zum kegelförmigen Zentralkörper 28 erfolgt.

## Patentansprüche

1. Schneidvorrichtung (10) zum Zerkleinern von pastösen Stoffen mit
(a) einer Düse (20) mit einem Düsengehäuse (21), das zumindest einen Einlass (22) mit einem Eintritts-Strömungsquerschnitt (23), durch den der pastöse Stoff in die Düse (20) eintritt, und einen Auslass (24) mit einem Austritts-Strömungsquerschnitt (25), durch den der pastöse Stoff aus der Düse (20) austritt, sowie einen von dem Einlass (22) zu dem Auslass (24) führenden Strömungskanal (26) aufweist, und
(b) einem an dem Auslass (24) angeordneten, rotierenden Schneidwerkzeug (30) zum Schneiden des austretenden pastösen Stoffes, wobei
der Austritts-Strömungsquerschnitt (25) die Form eines geschlossenen oder unterbrochenen Ringspaltes (27) aufweist, der durch einen sich in Förderrichtung des pastösen Stoffes im Querschnitt vergrößernden Zentralkörper (28) innerhalb der Düse (20) und einer Innenwand (29) des Strömungskanals (26) gebildet ist, **dadurch gekennzeichnet, dass** der Zentralkörper (28) sich von der Innenwand (29) des Strömungskanals (26) in Förderrichtung geneigt in den Strömungskanal (26) hinein erstreckt.

2. Schneidvorrichtung nach Anspruch 1, **dadurch gekennzeichnet, dass** der Zentralkörper (28) einstückig mit dem Düsengehäuse (21) ausgebildet oder als separater Einsatz in dem Strömungskanal (26) befestigt ist.

3. Schneidvorrichtung nach einem der voranstehenden Ansprüche, **dadurch gekennzeichnet, dass** sich die Strömungsquerschnittsfläche in Förderrichtung nicht verringert.

4. Schneidvorrichtung nach einem der voranstehenden Ansprüche, **dadurch gekennzeichnet, dass** die Fläche des Austritts-Strömungsquerschnitts (25) nicht kleiner als die Fläche der Eintritts-Strömungsquerschnittes (23) ist.

5. Schneidvorrichtung nach einem der voranstehenden Ansprüche, **dadurch gekennzeichnet, dass** der Zentralkörper (28) konisch und/oder sich kontinuierlich im Querschnitt vergrößernd ausgebildet ist.

6. Schneidvorrichtung nach einem der voranstehenden Ansprüche, **dadurch gekennzeichnet, dass** der Zentralkörper (28) als Hohlkörper ausgebildet ist.

7. Schneidvorrichtung nach einem der voranstehenden Ansprüche, **dadurch gekennzeichnet, dass** der Zentralkörper (28) längsverschieblich an dem Düsengehäuse (21) gelagert ist.

8. Schneidvorrichtung nach einem der voranstehenden Ansprüche, **dadurch gekennzeichnet, dass** eine Antriebswelle (52) des Schneidwerkzeugs (30) in dem Zentralkörper (28) gelagert ist.

9. Schneidvorrichtung nach einem der voranstehenden Ansprüche, **dadurch gekennzeichnet, dass** der Austritts-Strömungsquerschnitt (25) als ein einzelner unterbrochener Spalt (26) ausgebildet ist und der Zentralkörper (28) an dem Austritts-Strömungsquerschnitt (25) einen einzigen Steg (281) ausbildet.

10. Schneidvorrichtung nach einem der voranstehenden Ansprüche, **dadurch gekennzeichnet, dass** der Zentralkörper (28) als Kegel mit einem an der Mantelfläche angeordneten oder ausgebildeten Steg (281) ausgebildet ist.

11. Schneidvorrichtung nach einem der voranstehenden Ansprüche, **dadurch gekennzeichnet, dass** der Eintritts-Strömungsquerschnitt (23) kontinuierlich in den Austritts-Strömungsquerschnitt (25) übergeht.

12. Schneidvorrichtung nach einem der voranstehenden Ansprüche, **dadurch gekennzeichnet, dass** zum Erzeugen von Sollbruchstellen in dem pastösen Stoff an dem Auslass (24) Vorsprünge (271) angeordnet oder ausgebildet sind, die in den Ringspalt (27) im Austritts-Strömungsquerschnitt (25) hineinragen.

13. Schneidvorrichtung nach einem der voranstehenden Ansprüche, **dadurch gekennzeichnet, dass** das Schneidwerkzeug (30) zumindest eine von innen nach außen entgegen der Rotationsrichtung geneigte Schneide (31) aufweist.

14. Schneidvorrichtung nach einem der voranstehenden Ansprüche, **dadurch gekennzeichnet, dass** das Schneidwerkzeug (30) in Förderrichtung axial beabstandet zu dem Zentralkörper (28) und dem Düsengehäuse (21) gelagert ist.

15. Schneidvorrichtung nach einem der voranstehenden Ansprüche, **dadurch gekennzeichnet, dass** das Schneidwerkzeug (30) mehrere Schneiden (31) oder Schneidelemente aufweist.

16. Schneidvorrichtung nach einem der voranstehenden Ansprüche, **dadurch gekennzeichnet, dass** der Ringspalt (27) den Zentralkörper (28) um mehr als 180° umgibt.

17. System mit einer Schneidvorrichtung nach einem der voranstehenden Ansprüche und einer Weiterverarbeitungseinrichtung (50), an der die Schneidvorrichtung (10) angeordnet ist und in der der zerkleinerte pastöse Stoff weiterverarbeitet wird.

18. System nach Anspruch 17, **dadurch gekennzeichnet, dass** in der Weiterverarbeitungseinrichtung (50) ein Unter- oder Überdruck herrscht, der an dem Austritts-Strömungsquerschnitt (25) anliegt.

19. System nach Anspruch 17 oder 18, **dadurch gekennzeichnet, dass** die Weiterverarbeitungseinrichtung (50) als Trockner, Wirbelschichtverdampfungstrockner, Rösteinrichtung, Frittiereinrichtung, Granuliereinrichtung, Fluidisierungseinrichtung, Kühleinrichtung, Mischer oder Homogenisierer ausgebildet ist.

## Claims

1. Cutting device (10) for comminuting pasty substances, having
(a) a nozzle (20) having a nozzle housing (21) which has at least one inlet (22) having an entry flow cross section (23) through which the pasty substance enters the nozzle (20), and an outlet (24) having an exit flow cross section (25) through which the pasty substance exits the nozzle (20), and a flow duct (26) that leads from the inlet (22) to the outlet (24); and
(b) a rotating cutting tool (30) disposed on the outlet (24) for cutting the exiting pasty substance, wherein
the exit flow cross section (25) has the shape of a closed or interrupted annular gap (27) which is formed by a central member (28) within the nozzle (20), said central member (28) in the conveying direction of the pasty substance increasing in terms of the cross section, and by an internal wall (29) of the flow duct (26), **characterized in that** the central member (28) so as to be inclined in the conveying direction extends from the internal wall (29) of the flow duct (26) into the flow duct (26).

2. Cutting device according to Claim 1, **characterized in that** the central member (28) is configured so as to be integral to the nozzle housing (21) or as a separate insert is fastened in the flow duct (26).

3. Cutting device according to one of the preceding claims, **characterized in that** the flow cross-sectional face does not decrease in the conveying direction.

4. Cutting device according to one of the preceding claims, **characterized in that** the face of the exit flow cross section (25) is not smaller than the face of the entry flow cross section (23).

5. Cutting device according to one of the preceding claims, **characterized in that** the central member (28) is configured so as to be conical and/or so as to be continually enlarged in the cross section.

6. Cutting device according to one of the preceding claims, **characterized in that** the central member (28) is configured as a hollow member.

7. Cutting device according to one of the preceding claims, **characterized in that** the central member (28) is mounted so as to be longitudinally displaceable on the nozzle housing (21).

8. Cutting device according to one of the preceding claims, **characterized in that** a drive shaft (52) of the cutting tool (30) is mounted in the central member (28).

9. Cutting device according to one of the preceding claims, **characterized in that** exit flow cross section (25) is configured as a single interrupted gap (28), and the central member (28) configures a single web (281) on the exit flow cross section (25).

10. Cutting device according to one of the preceding claims, **characterized in that** the central member (28) is configured as a cone having a web (281) that is disposed or configured on the shell face.

11. Cutting device according to one of the preceding claims, **characterized in that** the entry flow cross section (23) continually transitions into the exit flow cross section (25).

12. Cutting device according to one of the preceding claims, **characterized in that** for generating predetermined breaking points in the pasty substance, protrusions (271) which protrude into the annular gap (27) in the exit flow cross section (25) are disposed or configured on the outlet (24).

13. Cutting device according to one of the preceding claims, **characterized in that** the cutting tool (30) has at least one blade (31) that is inclined from the inside to the outside, counter to the rotation direction.

14. Cutting device according to one of the preceding claims, **characterized in that** the cutting tool (30) is mounted so as to be axially spaced apart from the central member (28) and from the nozzle housing (21) in the conveying direction.

15. Cutting device according to one of the preceding claims, **characterized in that** the cutting tool (30) has a plurality of blades (31) or cutting elements.

16. Cutting device according to one of the preceding claims, **characterized in that** the annular gap (27) surrounds the central member (28) by more than 180°.

17. System having a cutting device according to one of the preceding claims and a further processing installation (50) on which the cutting device (10) is disposed and in which the comminuted pasty substance is further processed.

18. System according to Claim 17, **characterized in that** a negative pressure or a positive pressure which bears on the exit flow cross section (25) prevails in the further processing installation (50).

19. System according to Claim 17 or 18, **characterized in that** the further processing installation (50) is configured as a dryer, a fluid bed evaporation dryer, a roasting installation, a deep-frying installation, a granulating installation, a fluidizing installation, cooling installation, a mixer, or a homogenizer.

## Revendications

1. Dispositif de coupe (10) pour fragmenter des substances pâteuses, comportant
(a) une buse (20) ayant un boîtier de buse (21) qui présente au moins une entrée (22) ayant une section transversale d'écoulement d'entrée (23), par laquelle la substance pâteuse entre dans la buse (20), et une sortie (24) ayant une section transversale d'écoulement de sortie (25), par laquelle la substance pâteuse sort de la buse (20), et un canal d'écoulement (26) menant de l'entrée (22) à la sortie (24), et
(b) un outil de coupe rotatif (30) disposé à la sortie (24) pour couper la substance pâteuse sortant,
dans lequel
la section transversale d'écoulement de sortie (25) est sous la forme d'une fente annulaire fermée ou interrompue (27) qui est formée par un corps central (28) à l'intérieur de la buse (20) et par une paroi intérieure (29) du canal d'écoulement (26), ledit corps central augmentant en section transversale dans la direction de transport de la substance pâteuse,
**caractérisé en ce que**
le corps central (28) s'étend jusqu'à l'intérieur du canal d'écoulement (26) en étant incliné en direction de transport depuis la paroi intérieure (29) du canal d'écoulement (26).

2. Dispositif de coupe selon la revendication 1,
**caractérisé en ce que** le corps central (28) est formé d'un seul tenant avec le boîtier de buse (21) ou est fixé comme un insert séparé dans le canal d'écoulement (26).

3. Dispositif de coupe selon l'une des revendications précédentes,
**caractérisé en ce que** la surface de section transversale d'écoulement n'est pas réduite dans la direction de transport.

4. Dispositif de coupe selon l'une des revendications précédentes,
**caractérisé en ce que** la surface de section transversale d'écoulement de sortie (25) n'est pas inférieure à la surface de section transversale d'écoulement d'entrée (23).

5. Dispositif de coupe selon l'une des revendications précédentes,
**caractérisé en ce que** le corps central (28) est conique et/ou de section transversale croissant en continu.

6. Dispositif de coupe selon l'une des revendications précédentes,
**caractérisé en ce que** le corps central (28) est réalisé sous forme de corps creux.

7. Dispositif de coupe selon l'une des revendications précédentes,
**caractérisé en ce que** le corps central (28) est monté de façon déplaçable longitudinalement sur le boîtier de buse (21).

8. Dispositif de coupe selon l'une des revendications précédentes,
**caractérisé en ce qu'**un arbre d'entraînement (52) de l'outil de coupe (30) est monté dans le corps central (28).

9. Dispositif de coupe selon l'une des revendications précédentes,
**caractérisé en ce que** la section transversale d'écoulement de sortie (25) est réalisée sous la forme d'un seul intervalle interrompu (26), et le corps central (28) forme une seule barrette (281) au niveau de la section transversale d'écoulement de sortie (25).

10. Dispositif de coupe selon l'une des revendications précédentes,
**caractérisé en ce que** le corps central (28) est réalisé sous la forme d'un cône avec une barrette (281) disposée ou formée sur la surface enveloppe.

11. Dispositif de coupe selon l'une des revendications précédentes,
**caractérisé en ce que** la section transversale d'écoulement d'entrée (23) se transforme en continu en la section transversale d'écoulement de sortie (25).

12. Dispositif de coupe selon l'une des revendications précédentes,
**caractérisé en ce que**, pour produire des emplacements destinés à la rupture dans la substance pâteuse, des saillies (271) sont disposées ou formées à la sortie (24), qui pénètrent dans l'intervalle annulaire (27) de la section transversale d'écoulement de sortie (25).

13. Dispositif de coupe selon l'une des revendications précédentes,
**caractérisé en ce que** l'outil de coupe (30) présente au moins un tranchant (31) incliné de l'intérieur vers l'extérieur à rencontre du sens de rotation.

14. Dispositif de coupe selon l'une des revendications précédentes,
**caractérisé en ce que** l'outil de coupe (30) est monté axialement à distance du corps central (28) et du boîtier de buse (21) dans la direction de transport.

15. Dispositif de coupe selon l'une des revendications précédentes,
**caractérisé en ce que** l'outil de coupe (30) comporte plusieurs tranchants (31) ou éléments de coupe.

16. Dispositif de coupe selon l'une des revendications précédentes,
**caractérisé en ce que** l'intervalle annulaire (27) entoure le corps central (28) sur plus de 180°.

17. Système comprenant un dispositif de coupe selon l'une des revendications précédentes et un dispositif de traitement ultérieur (50) sur lequel est disposé le dispositif de coupe (10) et dans lequel la substance pâteuse fragmentée est traitée davantage.

18. Système selon la revendication 17,
**caractérisé en ce qu'**une pression négative ou positive règne dans le dispositif de traitement ultérieur (50) et est appliquée à la section transversale d'écoulement de sortie (25).

19. Système selon la revendication 17 ou 18,
**caractérisé en ce que** le dispositif de traitement ultérieur (50) est conçu comme un séchoir, un séchoir à évaporation à lit fluidisé, un dispositif de grillage, un dispositif de friture, un dispositif de granulation, un dispositif de fluidisation, un dispositif de refroidissement, un mélangeur ou un homogénéisateur.
